(19) **Europäisches Patentamt**

**European Patent Office**

**Office européen des brevets**

(11) **EP 1 227 338 B1**

(12) **EUROPÄISCHE PATENTSCHRIFT**

(45) Veröffentlichungstag und Bekanntmachung des Hinweises auf die Patenterteilung:
**03.03.2004   Patentblatt 2004/10**

(51) Int Cl.⁷: **G01S 13/90**, G01S 13/42, G01S 13/93

(21) Anmeldenummer: **01124820.0**

(22) Anmeldetag: **18.10.2001**

(54) **Verfahren zur Signalverarbeitung und -prozessierung nach dem ROSAR-System**

Method of signal processing according to the ROSAR system

Méthode de traitement de signaux selon le système ROSAR

(84) Benannte Vertragsstaaten:
**DE FR GB**

(30) Priorität: **18.01.2001   DE 10101991**

(43) Veröffentlichungstag der Anmeldung:
**31.07.2002   Patentblatt 2002/31**

(73) Patentinhaber: **EADS Deutschland GmbH**
**81663 München (DE)**

(72) Erfinder:
• **Klausing, Helmut, Dr.**
**82234 Hochstadt (DE)**
• **Kaltschmidt, Horst, Dr.**
**85579 Neubiberg (DE)**

(74) Vertreter: **Meel, Thomas**
**Patentassessor,**
**c/o Dornier GmbH**
**L H G**
**88039 Friedrichshafen (DE)**

(56) Entgegenhaltungen:
**EP-A- 1 004 895          DE-C- 3 922 086**
**DE-C- 4 323 511**

## Beschreibung

Die Erfindung bezieht sich auf ein Verfahren zur Signalverarbeitung und Signalprozessierung nach dem ROSAR-System gemäß dem Anspruch 1.

Aus der DE 39 22 086 und DE 43 23 511 ist ein ROSAR-System bekannt, das in Echtzeitnähe im Online-Betrieb einsetzbar ist, und das nicht nur zur Kartographie, der Hinderniswarnung und Minendetektion dient, sondern auch der Zielaufklärung der Zielverfolgung sowie der Flugkörpereinweisung. Dieses ROSAR-Gerät wird pulsfrequent oder im FM-CW-Betrieb eingesetzt und arbeitet im cm- oder mm-Wellenlängenbereich. Auf diesem Stand der Technik baut die nachstehende Erfindung auf.

Das ROSAR ist vom Betrieb her ein Seitensichtradar und liefert daher keine Elevationsinformationen. Die Realisierung eines ROSAR ist bisher unter dem Begriff "Heliradar" auf der Basis eines eigens hierfür zusätzlich auf der Rotorachse des Helikopters montierten Drehkreuzes erfolgt. Um nun doch eine "grobe" Elevationsinformation zu erhalten, wurden auf dem Drehkreuz Sende- und Empfangsantennen mit geringer Höhenabmessung vorgesehen, um wenigstens einen Kompromiss zwischen aerodynamischer Flugleistungsminderung und Höhenwinkelauflösung zu bekommen. Die durch das Drehkreuz verursachte Verminderung der Flugleistung ist zwar deutlich, aber nach Expertensicht durch den Zugewinn der Allwettersicht zu tolerieren.

Die hiermit erreichte grobe Elevationsauflösung wird durch die in Höhenwinkel gefächerte Antennencharakteristik der Sende- und Empfangsantenne erreicht. Da naturgemäß die erreichte Winkelauflösung mit dem Reziprokwert der - hier senkrechten - Antennenabmessung zusammenhängt, müssen flugleistungsmindernde "Höhenausstülpungen" an den Spitzen des Drehkreuzes hingenommen werden. Außerdem besteht das Problem, hohe elektrische Leistungen von der ruhenden Zelle des Helikopters in das rotierende Drehkreuz zu übertragen.

Wie aus vorstehenden Erläuterungen hervorgeht, gewinnen die bisher bekannten ROSAR-Signalverarbeitungs- und Prozessierungsmethoden die Elevationsinformationen der abzubildenden Umgebung durch vertikal gefächerte Sende- und Empfangsantennen, die in den Enden eines Drehkreuzes integriert sind. Dieses Drehkreuz rotiert synchron mit den Helikopterrotoren. Die Integration der vertikal gefächerten Sende- und Empfangsantennen hat aber die erwähnten Höhenausstülpungen zur Folge, die die angesprochene Verminderung der Flugleistung zur Folge haben. Hinzu kommt, dass eine komplizierte Drehkupplung erforderlich ist, welche die Hochfrequenz-Sendeenergie von der Hubschrauberzelle auch in das rotierende Drehkreuz überträgt.

Der vorliegenden Erfindung liegt die Aufgabe zugrunde, ein ROSAR-Verfahren aufzuzeigen, das die aufgezeigten Nachteile des Standes der Technik weitgehend vermindert und eine hohe Elevationsauflösung gewährleistet.

Diese Aufgabe wird durch die im Anspruch 1 aufgezeigten Maßnahmen gelöst. In den Unteransprüchen sind Weiterbildungen und Ausgestaltungen angegeben und an einem nachfolgend aufgeführten Ausführungsbeispiel erläutert. Diese Erläuterungen werden durch die Figuren der Zeichnung ergänzt. Es zeigen:

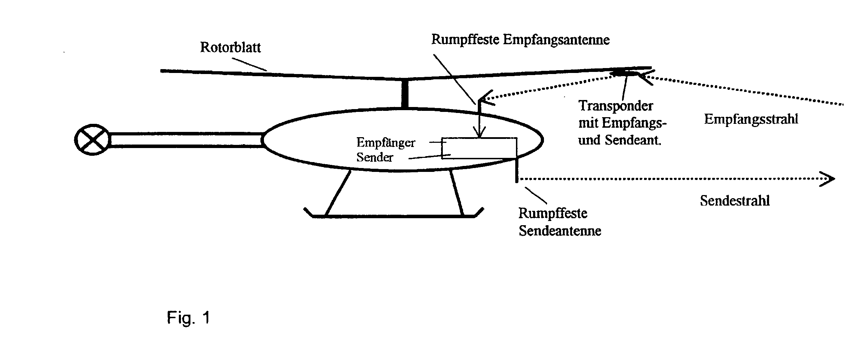

Fig. 1    ein mechanisch-elektrisches Blockschaltbild in schematischer Darstellung eines Ausführungsbeispiels der Gesamtanordnung,

Fig. 2    ein Schemabild der Gewinnung der Elevations- und damit der Höheninformation einzelner Reflexionspunkte des vorgeschlagenen Verfahrens im Vergleich zum Stand der Technik.

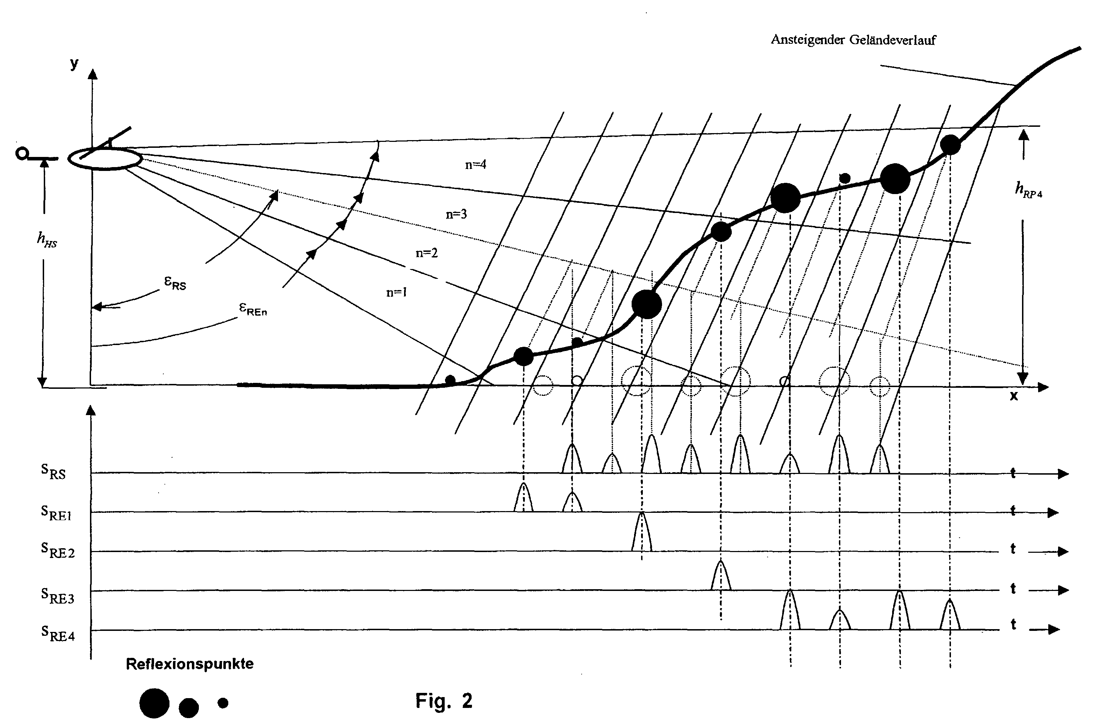

Der allgemeine Erfindungsgedanke sieht zur Realisierung eines ROSAR-Systems mit einer Elevationsinformation hoher Auflösung ohne ein zusätzliches Drehkreuz vor, dass diese Elevationsinformation dadurch gewonnen wird, dass von einer im oder am Helikopterkörper angeordneten feststehenden, teleskopartig ausfahrbaren Sendeantenne mit großer Vertikalabmessung, was zu einer hohen Elevationsauflösung führt, die abzubildende Umgebung fächerartig beleuchtet wird (Fig. 2, n=1 bis n=4). Dadurch entstehen übereinander liegende Sektoren in Elevation, die nun nach den bekannten ROSAR-Signalverarbeitungs- und Prozessierungsverfahren ausgewertet werden.

Der stabartige Sendeantennenträger ist mit einem länglichen Elementarantennenarray besetzt, wobei der Sendeantennenträger in seiner Länge viel größer als in seiner Breite ist. Die fächerartige Beleuchtung wird entweder durch mechanische oder durch elektronische Strahlschwenkung erreicht. Bei der elektronischen Strahlschwenkung ist jede dieser Elementarantennen phasengesteuert, so dass ein schwenkbares Mehrfachstrahlantennen-Diagramm erzeugt wird. Solange der Helikopter am Boden in Ruhe- bzw. Parkstellung steht, ist diese Teleskopantenne auf eine solche Länge in eingefahrenem Zustand, bei der keine Bodenberührung mehr möglich ist. Nach dem Start und einer gewissen Flughöhe wird dann die volle Antennenlänge ausgefahren.

Die Sendeantenne sendet nun in die verschiedenen Elevationssektoren (n=1 bis n=4) Breitbandsignale aus, aus deren Laufzeit die Entfernung zu den Umgebungsobjekten in bekannter Weise extrahiert wird. Diese Breitbandsignale sind im allgemeinen kurze Impulse, oder längere modulierte Impulse. In einigen Situationen wie z. B. zur Verminderung der Radarentdeckbarkeit werden vorteilhaft Pseudorauschsignale eingesetzt. Die reflektierten Signale werden von der in der Nähe der Blattspitzen des Helikopterrotors befestigten Transponderkarte empfangen, umgesetzt und zur feststehenden Empfangsantenne gesendet, wobei die Notwendigkeit der kohärenten Synchronisation der Sende- und Empfangssignale beim Sende- und Empfangsvorgang besteht. Die Lateralauflösung wird wie beim eingangs genannten und weiterem Stand der Technik der ROSAR-Technologie durchgeführt.

Die Fig. 2 veranschaulicht die Gewinnung der Elevationsauflösung. Das mit dem ROSAR-Verfahren nach dem Stand der Technik nicht erkennbare ansteigende Gelände mit mehreren unterschiedlich stark reflektierenden Reflexionspunkten wird beleuchtet. Die Echosignale werden mit dem ROSAR-Verfahren nach dem Stand der Technik nur auf einem Kanal empfangen und da hier ebener Geländeverlauf vorausgesetzt ist, werden die Reflexionspunkte fälschlicherweise auf einer Ebene liegend interpretiert. Demgegenüber verfügt das hier vorgeschlagene Verfahren über mehrere Elevationskanäle (beispielsweise n=1 bis n=4), so dass die Signale von den in der Höhe unterschiedlich liegenden Reflexionspunkten in unterschiedlichen Kanälen erscheinen. Dies wird dadurch erreicht, dass die Sendeantenne nacheinander unter den verschiedenen Depressionswinkeln die Szene beleuchtet. Synchron zu den verschiedenen Elevationswinkeln wird das Empfangssignal in die verschiedenen Kanäle (n=1 bis n=4) geleitet. Aus dem Eintreffzeitpunkt eines Echosignals in jedem Elevationssektor wird in an sich bekannter Weise die Entfernung $R$ extrahiert. Die Höhe $h_{RPn}$ eines Reflexionspunktes errechnet sich aus:

$$\frac{h_{HS} - h_{RPn}}{R} = \sin(\frac{\pi}{2} - \varepsilon_{REn})$$

und die gesuchte Höhe des Reflexionspunktes:

$$h_{RPn} = h_{HS} - R\sin(\frac{\pi}{2} - \varepsilon_{REn}).$$

Die getrennt gewonnenen Radarinformationen in lateraler und in Elevationsrichtung werden im ROSAR-Prozessor so verarbeitet, dass neben der klassischen Lateral- und Entfernungsinformation jetzt auch die Elevationsinformation zu Radarbildern verarbeitet werden. Dies ist bei militärischen Anwendungen, speziell bei Zielaufklärung und Flugkörpereinweisungen von großer Bedeutung.

Die Höhen- und Entfernungsinformationen werden nach dem Prinzip des Radars mit realer Apertur in bekannter Weise erfasst und verarbeitet. Zusätzliche Höhenund Entfernungsinformationen über Objekte in den einzelnen Elevationssektoren werden aus dem Schattenwurf der Objekte unter Verwendung einfacher trigonometrischer Gesetze errechnet.

Damit ist nun ein ROSAR-Verfahren aufgezeigt, zu dessen Durchführung kein Drehkreuz und keine Drehkupplung mehr erforderlich ist, eine besonders gute Elevationsauflösung erzielt wird, keine Höhenausstülpungen mehr auftreten und keine aerodynamische Verminderung der Flugleistung in Kauf genommen werden müssen.

**Patentansprüche**

1. Verfahren für ein Radarsystem mit synthetischer Apertur durch rotierende Antennen (ROSAR), das pulsfrequent oder im FM-CW-Betrieb eingesetzt wird oder mit Pseudorauschsignalen betrieben wird und im cm- bzw. mm-Wellenlängenbereich arbeitet, zur Erlangung von Elevationsinformationen hoher Auflösung, **dadurch gekennzeichnet, dass** mittels einer am Helikopterrumpf feststehend angeordneter, teleskopartig ausfahrbarer Sendeantenne mit großer Vertikalabmessung die abzubildende Umgebung in festgelegten Höhenwinkelsektoren fächerartig durch mechanische oder elektronische Schwenkung des Sendestrahls beleuchtet wird und so übereinander liegende Sektoren in Elevation gebildet und ausgewertet werden.

2. Verfahren nach Anspruch 1, **dadurch gekennzeichnet, dass** die ausfahrbare Sendeantenne von einem länglichen Elementararray gebildet wird, wobei die Länge desselben viel größer ist als dessen Breite und so phasengesteuert wird, dass ein schwenkbares Mehrfachstrahl-Antennendiagramm erzeugt wird.

3. Verfahren nach Anspruch 1 oder 2, **dadurch gekennzeichnet, dass** in der Nähe der Rotorblattspitze eine Transponderkarte angeordnet ist, die die reflektierten Signale empfängt, umsetzt und zur feststehenden Empfangsantenne weiterleitet, wobei die Sende- und Empfangssignale einer kohärenten Synchronisation unterworfen werden.

4. Verfahren nach einem der Ansprüche 1 bis 3, **dadurch gekennzeichnet, dass** die Elevationsinformationen zu Radarbildern verarbeitet werden.

5. Verfahren nach einem der Ansprüche 1 bis 4, **dadurch gekennzeichnet, dass** zusätzliche Höheninformationen von Objekten in den einzelnen Elevationssektoren aus deren Schattenwurf unter Verwendung einfacher trigonometrischer Gesetze ermittelbar sind.

**Claims**

1. Method for a radar system having a synthetic aperture by means of rotating antennas (ROSAR) which is used at the pulse frequency or in the FMCW mode or is operated with pseudo-random noise signals and operates in the centimetric or millimetric wavelength band, in order to obtain elevation information with high resolution, **characterized in that** the environment to be mapped is illuminated by means of a transmission antenna, which is arranged in a fixed position on the helicopter fuselage, can be extended like a telescope and has a large vertical dimension, in defined vertical angle sectors like fans by mechanical or electronic scanning of the transmission beam with elevation sectors which are located one above the other thus being formed and being evaluated.

**2.** Method according to Claim 1, **characterized in that** the transmitting antenna which can be extended is formed by an elongated element array, with the length of this array being much greater than its width, and being phase-controlled such that a multiple beam antenna polar diagram which can be scanned is produced.

**3.** Method according to Claim 1 or 2, **characterized in that** a transponder card is arranged in the vicinity of the rotor blade tip, receives the reflected signals, converts them and passes them to the stationary receiving antenna, with the transmission signals and received signals being subjected to coherent synchronization.

**4.** Method according to one of Claims 1 to 3, **characterized in that** the elevation information is processed to form radar images.

**5.** Method according to one of Claims 1 to 4, **characterized in that** additional height information can be determined from objects in the individual elevation sectors from the shadow that they throw, using simple trigonometric laws.

**Revendications**

**1.** Procédé pour un système radar à ouverture synthétique avec des antennes rotatives (ROSAR), qui est utilisé en mode de fréquence d'impulsions ou FM-CW ou est exploité avec des signaux de pseudo-bruit et fonctionne sur la plage de longueurs d'ondes centimétrique ou millimétrique, pour collecter des informations d'élévation de haute résolution, **caractérisé en ce que** l'environnement à représenter est éclairé en éventail au moyen d'une antenne émettrice déployable de façon télescopique de grande dimension verticale fixée sur le corps de l'hélicoptère, en secteurs d'angle d'élévation déterminés, par pivotement mécanique ou électronique du faisceau émis, et qu'ainsi des secteurs superposés sont formés en élévation et évalués.

**2.** Procédé selon la revendication 1, **caractérisé en ce que** l'antenne émettrice déployable est formée d'un panneau d'antennes oblong, dont la longueur est beaucoup plus grande que la largeur et qui est guidé en phase de manière à produire un diagramme d'antenne émettrice multiple orientable.

**3.** Procédé selon la revendication 1 ou 2, **caractérisé en ce qu'**à proximité de la pointe des pales du rotor est disposée une carte transpondeuse qui reçoit les signaux réfléchis, les convertit et les transmet à l'antenne réceptrice fixe, les signaux émis et reçus étant soumis à une synchronisation cohérente.

**4.** Procédé selon l'une quelconque des revendications 1 à 3, **caractérisé en ce que** les informations d'élévation sont traitées pour donner des images radar.

**5.** Procédé selon l'une quelconque des revendications 1 à 4, **caractérisé en ce que** des informations supplémentaires de hauteur des objets peuvent être déterminées dans les différents secteurs d'élévation à partir de leur ombre portée en utilisant des lois trigonométriques simples.

Fig. 1

Ansteigender Geländeverlauf

$h_{RP4}$

x

$n=4$

$n=3$

$n=2$

$n=1$

$\varepsilon_{REn}$

$\varepsilon_{RS}$

$h_{HS}$

y

$S_{RS}$

$S_{RE1}$

$S_{RE2}$

$S_{RE3}$

$S_{RE4}$

Reflexionspunkte

Fig. 2